(19) Europäisches Patentamt
European Patent Office
Office européen des brevets

(11) **EP 3 183 956 B1**

(12) **EUROPEAN PATENT SPECIFICATION**

(45) Date of publication and mention
of the grant of the patent:
**06.06.2018   Bulletin 2018/23**

(51) Int Cl.:
*A01K 3/00* *(2006.01)*     *H01B 5/00* *(2006.01)*

(21) Application number: **16206004.0**

(22) Date of filing: **21.12.2016**

(54) **ELECTRIC WIRE FENCE**

ELEKTRODRAHTZAUN

CLÔTURE EN FIL ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2015   LU 92922**

(43) Date of publication of application:
**28.06.2017   Bulletin 2017/26**

(73) Proprietor: **ArcelorMittal Bissen & Bettembourg
7769 Bissen (LU)**

(72) Inventor: **BÄR, Igor
7767 Bissen (LU)**

(74) Representative: **Office Freylinger
P.O. Box 48
234, Route d'Arlon,
8001 Strassen (LU)**

(56) References cited:
**EP-A1- 0 566 489          EP-A2- 1 114 582
DE-U1-202012 003 455**

**Description**

FIELD OF THE INVENTION

The present invention generally relates to fences and in particular to electric wire fence systems used to provide a secure enclosure.

BACKGROUND OF THE INVENTION

As it is known in the art, fences are generally freestanding structures designed to restrict or prevent movement across a boundary. Fences are typically distinguished from walls by the lightness of their structure. Fences are largely used in agriculture but also elsewhere, where the divisions or subdivisions of areas become important.

Amongst the many fence types, e.g. all wood, all steel wire, polymer, PVC... traditional materials such as single wires, wire mesh and barbed wire are very popular for fencing.

For example, wire fences, combined with a line of barbed wire, are often employed for fencing cows. The barbed wire prevents cows from heavily leaning against the fence, or from attempting escaping, thereby helping in protecting the fence.

Electric wires constitute another very popular way of deterring animals from leaning against a fence. Electric wires can be used in an existing fence structure (e.g. wood, plastic or wire), or can be used alone to form a fencing system.

For some animals, in particular with horses, electric wires are the only option, because barbed wire would cause severe injuries to the animals.

Conventional electric fences include one, or several parallel, electrically conductive wires supported by posts in a field. The wires are electrified to create an electrical potential difference between two parallel wires or between the wires and the ground. When an animal gets into contact with the wire, a current path is created from the electrified wire, through the animal, to the ground (directly or via another wire). This current flow shocks the animal and causes unpleasant sensations that will typically cause the animal to avoid the fence. The severity of the shock can be controlled by adapting the voltage and current supplied to the conductive wire(s).

Such traditional electric fencing can be implemented at low costs with galvanized steel wire. But some of the main drawbacks of this type of fence are in fact linked to the actual use of simple steel wire:

- the steel wire, of gray color, suffers from poor visibility and it is known today that, for horses and other animals, it is important for the fencing to be visible, whereby the animals get to learn the limit of the enclosure;

- the small wire diameter, added to poor visibility, further exacerbates the risk of injury (slicing or cutting) when the horse runs into the wire;

- rain and humidity on the bare wires cause moisture, which can cause leakage currents (between wires or by contact with grass, plants or snow), diminishing the efficiency of the electric fence.

In order to achieve increased visibility and durability for the electric fence wires, it has been proposed to arrange conductive wires to some kind of support structure, for example a woven polymer band of bright (white) color.

Alternatively, EP 1 523 883 discloses an electric fence wherein the horizontal conductor wire is supported by an elongate support member of nonconductive material, the support member having a higher flexural strength than the conductor.

Indeed, another difficulty of electric fences is to ensure both good electrical conductivity and mechanical performance. In this connection, EP 1 114 582 discloses an electric fence comprising one electrically conducting metal wire (stainless steel wire) extending over the whole length of the fence, and provided with good mechanical properties, associated with a support, and further incorporating at least one other electrically conducting wire with good electrical conductivity (copper or aluminium wire). The copper wire is sheathed with an insulating material over its entire length except for zones distributed at more or less regular intervals where the copper wire is contact with the stainless steel wire with good mechanical properties. Putting the conducting wire in contact with the conducting metal wire provides a relay effect, increasing again the potential of the stainless-steel wire.

Another known solution is the electric fencing wire known as "White Lighting" sold by Centaur HTP Fencing Systems (in Muscle Shoals, AL, USA). White Lighting is an electric wire for permanent fencing; it consists of a high tensile single wire coated with an insulating polymer layer in which a set of three carbon radiuses conduct the wire voltage to the wire periphery.

While the previous solutions do indeed address the problem of visibility, they are substantially expensive.

OBJECT OF THE INVENTION

The object of the present invention is to provide an electric wire fence system of improved designed, in particular having regard to visibility and safety, and that can be manufactured in a simple and cost effective process. A further object of the invention is to provide an electric wire fence, which combines both good mechanical strength and electrical performance.

This object is achieved by an electric wire fence system as claimed in claim 1.

SUMMARY OF THE INVENTION

The present invention relates to an electric wire fence system comprising at least one electric fencing wire (in short "electric wire") attached to a support structure and an energizer unit to energize/electrify the electric wire. According to the invention, the electric wire comprises twisted wires where:

- a first wire is a non-insulated steel wire;

- a second wire is a coated steel wire having a visibility-enhancing color;

- the wires are longitudinally twisted together in an alternating manner;

- at least the first wire is connected to the energizer unit.

The invention thus employs an electric fencing wire formed as a stranded electric wire, stranded with two wire strands (or more) and presenting an alternation of twisted sections, in opposite directions. In other words, the wire strands are, in two neighboring/consecutive twisted sections, twisted in alternate directions.

Two consecutive twisted sections are separated by an intermediate section where the wires run parallel. If desired, the wires may be locally firmly united at the intermediate sections. Alternatively the change from one twisting direction to the other can be done at a transition point.

The wires are preferably smooth wires, and the electric wire thus also presents a generally smooth outer surface. That is, the electric wire is designed as a stranded wire with smooth periphery, devoid of any sharp elements configured to cause injury to an animal or person.

In practice, the electric fencing wire may consist of up to 3, 4 or 5 wire strands. Preferably, the electric fencing wire is a stranded wire pair consisting of the first and second wires only. The two-wire strand has a great versatility of use. In some applications, e.g. where a greater rigidity is desired, the electric fencing wire may comprise more than two wires.

It shall be appreciated that the present electric wire fence system with, such electric fencing wire, has two immediate benefits: good visibility and enhanced flexibility, leading to reduced risks of injury for animals.

Indeed, the second wire with its colored coating brings visibility to the electric wire. The reverse twist of the electric wire brings an optical effect also adding to visibility. Animals may therefore more easily identify the fencing and avoid it. This is of particular importance for horse enclosures. The electric wire is also easier to notice for farmers or persons walking nearby, during day and night time.

Moreover, as will be explained in detail herein below, the present electric wire has an increased flexibility compared to a single strand electric wire, thanks to the use of reverse twisting. The increased flexibility or elasticity confers a greater deformability of the wire in the direction transversal to the wire/fence, providing some sort of dampening effect. This increased flexibility protects animals from injury, even when the electric wire is well tensioned, avoids an early breaking of the electric wire, and facilitates the wire installation.

The increased wire diameter, compared to a single electric wire, further reduces risks of injury (such as slicing or cutting).

It shall further be noted that the present invention can be manufactured in simple processes, with existing equipment. Electric wire fences according to the invention can be easily installed, and retro-fitting is also possible.

In one advantageous embodiment, the second wire is also electrically insulated and electrified, and locally electrically interconnected with the first wire, at one or more positions along the length of the electric wire. As it will be understood, whereas the first wire is subject to electrical losses due to external causes (moisture, bushes or grass), it is not the case for the second wire which is protected by its insulation coating. The local electrical connection between the first and second wires allows compensating the electrical losses in the first wire, and thus helps maintaining a proper service voltage over the length of the fence. The local electrical interconnection between the first and second wires may be carried out at the end of the electric wire, opposite the energizer unit, and/or at one or more intermediate locations along the length of the electric wire.

In practice, the first and second wires may be soft, medium or high tensile strength steel wires, generally manufactured from carbon steel. The carbon content may be between 0.2 and 0.8 wt.%. In general, the wire strands may have a tensile strength between 350 MPa and 1800 MPa. The individual wire strands may, for most application, have a diameter ranging from 0.5 to 3 mm, preferably 0.8 to 2.5 mm.

They steel wires are preferably provided with a metallic corrosion preventing layer directly on the wire, e.g. a zinc and/or aluminum-based coating. Such coatings will prevent wear of the wire due to water/humidity, but do not provide an electrical insulation.

The electric insulation of the second wire can be provided in any appropriate manner; also, the coating can be generally carried out in one or more layers. Preferably, the wire is coated with a single layer of plastic/organic material that has a bright color and is electrically insulating. The second wire may e.g. be provided with an extruded PVC coating of desired color. Otherwise the steel wire can be first coated with an electrically insulating material and then over-coated with the colored layer. The total thickness of such insulated and colored coating may be in the range of 0.3 to 500 μm.

In embodiments, the wire may comprise twisted sections with between 3 to 15 complete twists, preferably between 3 and 10. A twist may have a pitch of between 5 and 60 mm, preferably between 20 and 40 mm. In particular, the twisted sections may have a pitch-to-diameter ratio of between 8 to 25, preferably between 12 to 18.

In some embodiments, the second wire may have a conductor diameter larger than the diameter of the first wire. This reduces the electric resistivity of the wire and increases its mechanical strength. One may further control resistivity and strength of the wires by playing on the carbon content of the steel.

The present electric wire fence system can take a diversity of forms in practice and may thus be used in a variety of applications, in particular in agriculture, industry, military or other sensitive areas, or as simple boundary-perimeter limit, for enclosing or preventing access to animals and/or humans.

The presently described electric fencing wire can be used in combination with various support structures, permanent or temporary, with or without foundations, and in combination with other fencing elements. The support structures can have any appropriate shapes and be made from any appropriate materials, in particular wood, steel, plastic, concrete, or combinations thereof.

The above and other embodiments are also recited in the appended dependent claims.

According to another aspect, the present disclosure also concerns the above electric fencing wire as such.

BRIEF DESCRIPTION OF THE DRAWINGS

The present invention will now be described, by way of example, with reference to the accompanying drawings, in which:

FIG. 1: is a sketch of an embodiment of the electric wire used in the present fencing system;

FIG. 2: is a principle diagram of an embodiment of the present electric wire fence system featuring the wire of Fig.1, in the form of a field fence;

FIG. 3: is a diagram of the electric compensation principle applied in the present fencing system;

FIG. 4: comprises views of three different ways of electrically connecting the wires of the electric wire of Fig.1;

FIG. 5: is a sketch of another embodiment of the present fencing system, for example for military purposes; and

FIG. 6: is a stress-strain diagram representing the behavior of several types of wires.

DETAILED DESCRIPTION OF A PREFERRED EMBODIMENT

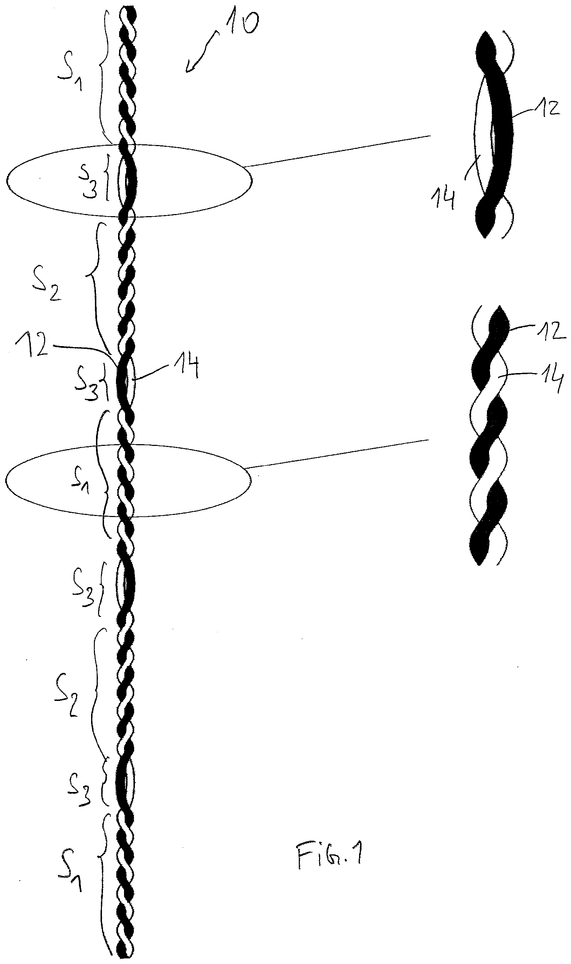

Fig.1 shows a principle diagram of an embodiment of the present electric fencing wire 10 for use in electric wire fence systems.

The electric fencing wire 10, hereinafter also called "electric wire" or "electric wire line", consists of a pair of wires twisted longitudinally, in an alternating manner. The first wire 12 (in black the figures) is a non-insulated steel wire with the function of a regular electric conductor wire, and is thus also referred to as conductor wire. In use, the conductor wire 12 is connected to the energizer unit of the electric fence system. Since the wire is non-insulated, it offers an electrified metallic surface over its whole length, so that any animal or person touching the wire surface/periphery will receive an electric shock. The first wire 12 may typically be a smooth steel wire with an electrically conductive anticorrosion coating (e.g. galvanized steel wire).

The second wire 14 is a steel wire with a visibility-enhancing coating. The second wire 14 may typically be a carbon steel wire, coated with a polymer or organic layer having the primary function of enhancing the visibility of the wire. Hence, this outer coating of wire 14 may thus generally have a bright color. A variety of bright or appealing colors can be envisaged, uniform or patterned, including e.g. one or more of the following colors: white, yellow, orange, red, some shades of blue and green, combinations thereof, including fluo.

The present wire 10 is obtained by longitudinally twisting together the two wires 12 and 14 (manufactured independently) to form a strand with alternate twists. This way of stranding a pair of parallel wires is known in the art as reverse twisting. That is, the wires are alternately twisted in both directions (left and right), as opposed to unidirectional twisting (where the wire is twisted either left or right over the whole length of the strand).

As can be observed in Fig.1, electric wire 10 hence exhibits, over its length, an alternate succession of twisted sections, in one direction and in the other. Wire sections with twists in a first direction are indicated S1, whereas the sections with twists in the opposite, second direction are indicated S2. Every other section thus has the same twist direction. Expressed in yet another manner, the wires are twisted by sections, where in two successive (neighboring) sections, the wires are twisted in alternate directions. The wires are in close contact with each other. Two adjacent twisted sections are separated by an intermediate section, where the wires are not twisted and remain fairly parallel and straight. This intermediate section may also be referred to as flattened section. The length of the flattened section can be varied, e.g. between 5 and 50 mm, in particular between 10 and 30 mm. The flattened section materializes the location of the change of twisting direction, and brings an added optical effect rendering the wire more visible.

The flattened section is in other arrangements, not according to the invention, optional. From the manufacturing point of view, the transition from one twisting direction to the other can be very short or even direct, at a "transition point", i.e. a flattened intermediate section is not necessarily required.

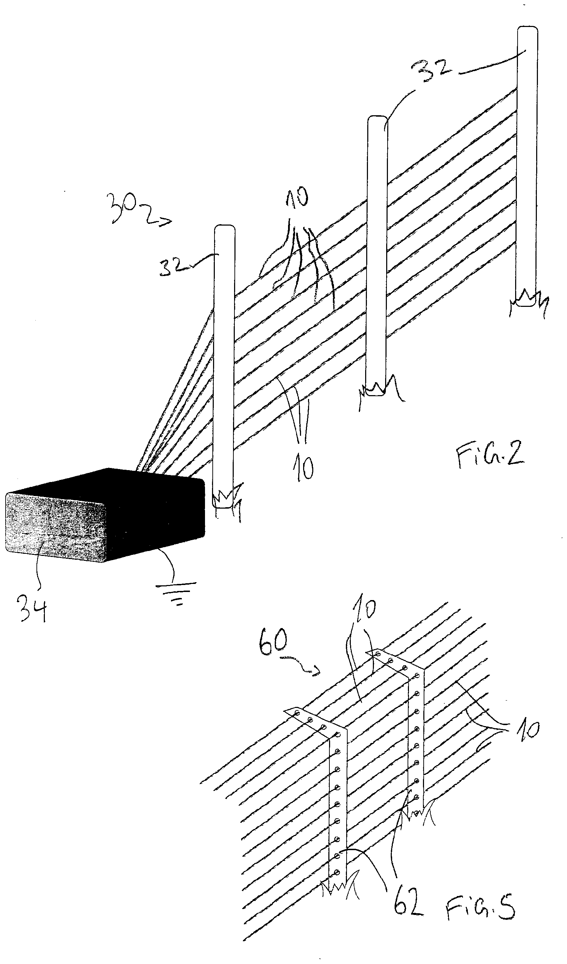

Turning to Figure 2, there is shown an electric wire fence system 30 using the electric wire 10. Several lines of electric wire 10 are fixed to a support structure, here simple posts 32 arranged vertically in the ground. Since wire 12 is an exposed conductor wire, the wire 10 is advantageously fixed in an electrically insulated manner to the posts 32. The electric wire lines 10 run parallel to each other and to the ground. All the wire lines 10 are electrically connected at one end to an energizer unit 34, which is generally referred to as electric fence energizer or electrical charger. Classically, the wire 10 can be connected directly to the charger (e.g. to individual outputs) or indirectly (e.g. to a main conductor). It may be noted here that, as will be developed in more detail below, at least the first wire 12 is electrically connected to energizer unit 34.

The energizer unit 34 is configured to provide the electric power necessary to energize the wires 10, typically up to several kV. It can be of any appropriate design and may itself be connected to an AC power supply, a battery or comprise solar panels. The energizer unit 34 has an earth contact to provide a return flow path for the current.

It shall be appreciated that an electric fence using the electric fencing wire 10 has numerous benefits:

- the fencing wire 10 has an enhanced visibility thanks to the colored wire 14, and can be better seen than a single electrified galvanized wire;

- the fencing wire 10 has a greater thickness than a single electrified galvanized wire, since it consists of a pair of stranded wires, and is therefore less likely to cause injuries to animals.

It shall be further appreciated that the risk of animal injury is also reduced since the electric wire 10 presents greater elasticity/flexibility over conventional single electrified galvanized wires. This increased elasticity is due to the use of a reverse-twisted stranded wire.

Indeed, when an animal leans or pushes against the wire 10, it has an elastic capacity due to the fact that, before involving the intrinsic elasticity of the individual wire strands, the twisted sections will first unwind.

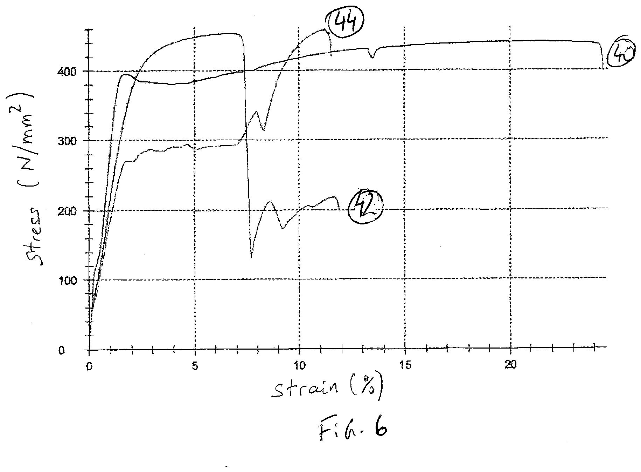

The enhanced elastic behavior of a reverse-twisted wire over a single wire and a wire with simple twists has been verified by tensile tests. Fig.6 shows the elongation / stress diagram for a single (non-deformed) wire (sample A) as well for two wires of the same diameter, but once with simple twist (sample B) and once with reverse twist (sample C). All single wires were of the same diameter, grade, strength and length. Since for samples B and C the equivalent diameter was entered into the test apparatus, the stresses are comparable for all three samples/tests.

The samples:

- sample A (curve 40 in the graph): a single steel wire, without any twists, having a diameter of 2.44 mm.

- sample B (curve 42): a stranded wire consisting of two wires 2 stranded with a simple twist (unidirectional).

- sample C (curve 44): a stranded wire consisting of two 2 reverse twisted wires.

For samples B and C, the two strands had a diameter of 2.44 mm, meaning an equivalent diameter of 3.45 mm for the stranded wire. The pitch of the twists (i.e. axial length for a complete twist) was 30 mm.

The three samples were tested in a tensile test apparatus, where a same length of wire was attached between two gripper jaws and a pull force applied to the wire in its axial/longitudinal direction by the gripper jaws.

As can be readily observed from figure 6, the deformability at a given stress level is higher for a reverse twist wire (sample C) than for a simple twist one; and for both twisted wires it is higher than for a single wire. Table 1 summarizes the deformability of the different samples at two stress levels.

Table 1

| Stress level | Sample A | Sample B | Sample C |
|---|---|---|---|
| 200 MPa | 0.7% | 0.9% | 1.1% |
| 260 MPa | 0.9% | 1.2% | 1.6% |

For all three samples, the ultimate tensile stress is fairly similar (within normal tolerances on material). Although the breaking elongation for the untwisted wire (sample A) is higher than for the twisted ones, this is not a desired behavior since the wire would have too much residual deformation and, more importantly, the yielding platform is too close to the ultimate resistance, so that the wire can break at any moment without increasing the load/stress significantly.

For both twisted wires, samples B and C, the ultimate strain is the same (12%).

What is however remarkable is that for the reverse twist wire (sample C) an intermediate platform is obtained, here around 280 MPa, which corresponds to the unwinding of the twists, and gives the wire an additional capacity reserve preventing from overloading (the undesired behavior observed for the single wire - sample A). This being said, for both twisted wires, the transition from elastic to plastic behavior is smoother and less sudden as for a single non-twisted wire.

It may be noted that the curves have been obtained for mechanical tests where the load is progressively applied up to the yield. As observed above, the reverse-twisted wire behaves elastically until the twists start unwinding: from that moment on, a more or less regular plateau is observed. Then, after unwinding, the stress increases again with a reduction in diameter up to the yielding of one, and then both wires.

In a field however, the wire will not typically be loaded under such conditions, but will be subject to several loads. Tests have thus been carried out by the Applicant to check the behavior of the reverse twisted wire when the load is stopped at the given elongation, say e.g. between 2 and 5%, and then the load is applied again up to yielding. What can be observed is that when the charge is reapplied, the curves re-start at the stop point of the previous loading. This means that there is no loss of ductility/deformability when the wire is progressively loaded, as would be the case with animals running into the fence several times. It has also been observed that the twists tend to unwind/unroll one after another in a random manner.

As indicated before, the intermediate flattened sections are optional. When such flattened sections are present, their length is not considered to influence significantly the mechanical behavior of the wire (provided it remains comparatively smaller than a twisted section). It may further be noted that the two wire strands of the twisted wire can be punctually united together, e.g. by means of welding or clipping, e.g. at some locations such as at the flattened sections. This does not affect the unwinding of the twisted sections.

From the above, an electric wire fence as shown in Fig.2, i.e. using the reverse twisted wire of figure 1, benefits from an enhanced ductility, which will avoid injury an animal running into the fence. Furthermore, the ductility or spring effect of the fence can be adapted to the size (and weight) of the animals in the enclosure, by selecting the tensile strength of the wires, while at the same time acting on the elongation and plastic deformation of the electric wire 10 after shock.

In addition to enhanced flexibility, the present fence system also proves advantageous from the electric point of view.

A known shortcoming of electrical fences is the tension loss along the electric wire, this loss increasing further away from the energizer. The losses are due to the wire's own resistance, but also to so-called "external causes", namely: moisture, or contact with trees, bushes or grass... The longer the electric wire line, the greater the losses, but the voltage should not drop below a critical value so that the electric shock can be ensured over the whole length of the fence.

This problem can be addressed in an electric fence system using the present wire 10, by:

- connecting both wires 12 and 14 to the energizer unit; and

- locally electrically connecting the conductor wire 12 with the insulated wire 14, at one or more positions along the length of the wire 10.

For this aspect of the invention, the second wire 14 must be electrically insulated. The insulated, second wire 14 is therefore not subject to losses due to external causes and the voltage therein is generally superior to that of the conductor wire 12. Locally connecting the two wires 12 and 14 will create a local equilibrium, the voltage in the conductor wire 12 increasing and that in the insulated wire decreasing, to reach a same value. This allows compensating the losses in the conductor wire 12 by means of the insulated wire 14.

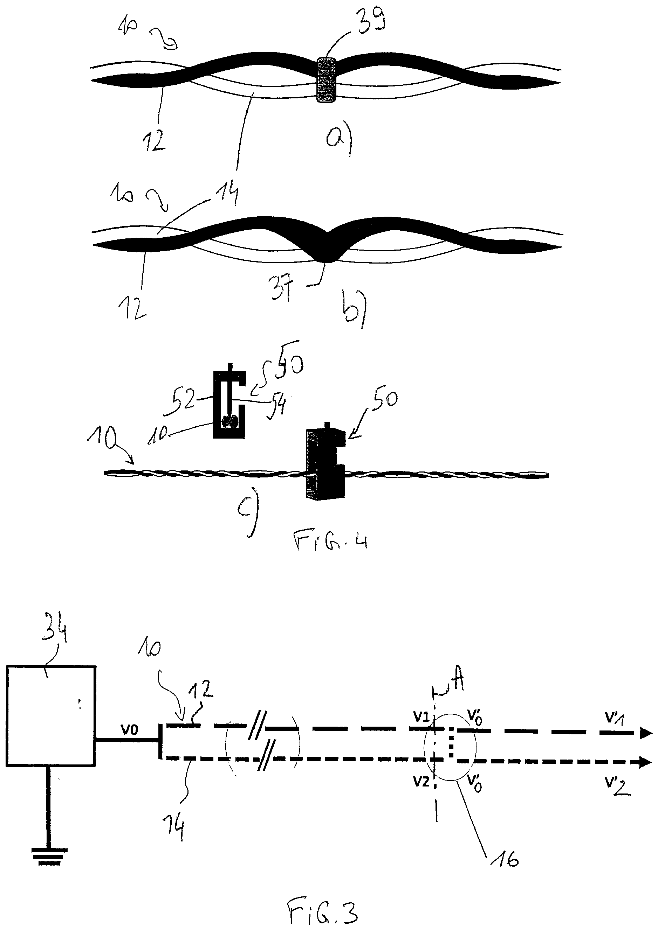

The principle of this electric compensation is illustrated in Fig.3. The wire 10 is here simply represented by two parallel wires, for simplicity. The two wires are connected with the energizer, where the initial voltage is $V_0$. After a certain length of wire, the voltage in the wires will have drop, to a greater extent in conductor wire 12 due to external causes. At point A along the wire line 10, we have the voltages $V_1$ and $V_2$ in the two wires where;

$$V_0 > V_1, \quad V_0 > V_2 \quad \text{and} \quad V_2 > V_1.$$

Just after point A the two wires 12 and 14 are locally connected together, as indicated by reference sign 16. At this point a voltage equilibrium is reached, indicated $V_0'$. As explained above, the voltage $V_0'$ is higher than the voltage $V_1$.

Further away along the wire the voltage will decrease again due to losses, with $V_2' > V_0$ and $V_2' > V_1'$.

The electrical insulation of the second wire 14 is preferably provided by coating the steel wire with a layer of polymer/organic material that provides both the desired, bright color and is electrically insulating, e.g. an extruded PVC coating or other appropriate technique. Alternatively, the coating can be a multilayer, e.g. done in two steps, providing first an insulating coating and then covering the coating with a bright colored layer. The steel wire itself (i.e. the metal core wire) may bear a metallic, anti-corrosive layer; it may in particular be a galvanized wire.

The local electrical interconnection between conductor wire 12 and the insulated wire 14 can be done in any appropriate manner. The insulated wire 14 can be locally uncoated and connected by means of an electrically conductive clamp to the conductor wire 12. This is illustrated in Fig.4 a), where the clamp takes the form of a metallic ring 39 that is firmly pressed against the two wires.

Another way of electrically locally connecting the pair or wires 12 and 14 is by welding or soldering. The insulated wire 14 is locally uncoated and the conductor wire is fixed to the latter by a welding point 39, as represented in Fig.3 b).

A further possibility is to use a connector device 50 with a body 52 defining a passage for the twisted wire 10 and a metallic element 54. The metallic element is shaped so that it be pressed against the wires in order to fix the connector device 42 in place on the wire 10 while at the same time establish the electrical contact between the wires 12 and 14. The insulating coating of insulated wire 14 may be locally removed before, or the metallic element may be designed to penetrate the insulating coating.

Fig.4 is given here for illustration purposes only and the examples presented therein should not be considered as limiting.

In another alternative, a connector device can be used to connect two separate lengths of wire line 10. Such conductor device can take any appropriate form, with the function of uniting the two length of electric line wire by their respective ends, to establish electrical contact and exert sufficient pressure force to withstand the tensile force exerted on the wire. Even a conventional metallic clip designed to join and tension fencing wire could be used (see e.g. the "barbed" joining clip commercialized by the company GRIPPLE, UK).

The fencing of Fig.2 is only one example of electrical wire fence system according to the present invention. While in Fig.2 the fence includes only electric wire line 10, some of the wires lines could be replaced by conventional, non-electrified single steel wire or barbed wire.

Another fencing embodiment 60 is shown in Fig.5, where the electric fencing wire 10 extends between, and is fixed to, L-shaped posts 62. Such fencing structure could be e.g. used for enclosing a military facility.

As a matter of fact, the wire 10 can be used with a diversity of support structures, dedicated to supporting the wire and/or comprising other fencing elements. The support structures or elements may:

- be permanent or temporary, with or without foundation,

- take any appropriate shape

- be made from any appropriate materials, in particular wood, steel, plastic, concrete, or combinations thereof.

## Claims

1. An electric wire fence system comprising at least one electric wire (10) attached to a support structure (32) and an energizer unit (34) to energize the electric wire (10), wherein said electric wire (10) comprises twisted wires wherein:

- a first wire (12) is a non-insulated steel wire;
- a second wire (14) is a coated steel wire having a visibility-enhancing color;
- the wires (12, 14) are longitudinally twisted together in an alternating manner;
- at least the first wire (12) is connected to the energizer unit (34); wherein the electric wire (10) exhibits an alternation of twisted sections (S1, S2) of wires (12, 14), in opposite directions, two consecutive sections being separated by an intermediate point or an intermediate section (S3) where the wires run parallel.

2. The electric wire fence system according to claim 1, wherein the electric wire (10) is formed as a smooth wire strand, the wires (12, 14) being preferably in close contact with each another.

3. The electric wire fence system according to claim 1 or 2, wherein the electric wire (10) is a two-strand wire consisting of the first and second wires.

4. The electric wire fence system according to claim 1, 2 or 3, wherein the wires (12, 14) are locally firmly united at the intermediate sections.

5. The electric wire fence system according to any one of the preceding claims, wherein a twisted section comprises between 3 and 15 complete twists, preferably between 3 and 10.

6. The electric wire fence system according to any one of the preceding claims, wherein a twist has a pitch of between 5 and 60 mm, preferably between 20 and 40 mm.

7. The electric wire fence system according to any one of the preceding claims, wherein the electric wire has, in the twisted sections, a pitch-to-diameter ratio of between 8 to 25, preferably between 12 to 18.

8. The electric wire fence system according to any one of the preceding claims, wherein the second wire (14) is electrically insulated, and both the first wire and the second wire are electrified.

9. The electric wire fence system according to claim 8, wherein the first wire and second wire are locally electrically interconnected at one or more positions along the length of the electric wire.

10. The electric wire fence system according to claim 9, wherein the local electrical interconnection between the first and second wires is carried out at the end of the electric wire, opposite the energizer unit, and/or at one or more intermediate locations along the length of the electric wire.

11. The electric wire fence system according to claim 8, 9 or 10, wherein the second wire has a larger diameter than the first wire for better electrical conductivity.

12. The electric wire fence system according to any one of the preceding claims, wherein the load required to start unwinding the twists is between 45 and 65% of the tensile strength of the wire strands, preferably between 50 and 65%, more preferably between 55 and 60%.

13. The electric wire fence system according to any one of the preceding claims, wherein the support structure is a permanent or temporary structure, comprising posts or other support members, on which one or more electric wires are fixed in an electrically insulated manner, and the support structure may comprise other fencing elements.

14. The electric wire fence system according to the preceding claim, wherein the support structure may be made from wood, steel, plastic, concrete, or combinations thereof.

15. The electric wire fence system according to any one of the preceding claims, wherein the wires are, in two consecutive twisted sections, twisted in alternate directions.

**Patentansprüche**

1. Elektrisches Drahtzaunsystem, umfassend mindestens einen elektrischen Draht (10), der an eine Stützstruktur (32) und eine Energieversorgungseinheit (34), um den elektrischen Draht (10) mit Energie zu versorgen, angebracht ist, wobei der elektrische Draht (10) verdrehte Drähte umfasst, wobei:

- ein erster Draht (12) ein nicht isolierter Stahldraht ist,
- ein zweiter Draht (14) ein beschichteter Stahldraht mit einer Farbe für verbesserte Sichtbarkeit ist,
- die Drähte (12, 14) längsweise in einer abwechselnden Weise zusammen verdreht sind,
- mindestens der erste Draht (12) mit der Energieversorgungeinheit (34) verbunden ist,

wobei der elektrische Draht (10) ein Abwechseln von verdrehten Abschnitten (S1, S2) von Drähten (12, 14) in entgegengesetzte Richtungen aufweist, wobei zwei aufeinanderfolgende Abschnitte durch einen Zwischenpunkt oder einen Zwischenabschnitt (S3) getrennt sind, wobei die Drähte parallel verlaufen.

2. Elektrisches Drahtzaunsystem nach Anspruch 1, wobei der elektrische Draht (10) als glatter Drahtstrang gebildet ist, wobei die Drähte (12, 14) vorzugsweise in engem Kontakt miteinander sind.

3. Elektrisches Drahtzaunsystem nach Anspruch 1 oder 2, wobei der elektrische Draht (10) ein Zwei-Strang-Draht ist, der aus dem ersten und zweiten Draht besteht.

4. Elektrisches Drahtzaunsystem nach Anspruch 1, 2 oder 3, wobei die Drähte (12, 14) lokal an den Zwischenabschnitten fest vereint sind.

5. Elektrisches Drahtzaunsystem nach einem der vorhergehenden Ansprüche, wobei ein verdrehter Abschnitt zwischen 3 und 15 vollständigen Verdrehungen umfasst, vorzugsweise zwischen 3 und 10.

6. Elektrisches Drahtzaunsystem nach einem der vorhergehenden Ansprüche, wobei eine Verdrehung eine Höhe von zwischen 5 und 60 mm hat, vorzugsweise zwischen 20 und 40 mm.

7. Elektrisches Drahtzaunsystem nach einem der vorhergehenden Ansprüche, wobei der elektrische Draht in den verdrehten Abschnitten ein Höhe-zu-Durchmesser-Verhältnis von zwischen 8 bis 25 hat, vorzugsweise zwischen 12 bis 18.

8. Elektrisches Drahtzaunsystem nach einem der vorhergehenden Ansprüche, wobei der zweite Draht (14) elektrisch isoliert ist und sowohl der erste Draht als auch der zweite Draht elektrifiziert sind.

9. Elektrisches Drahtzaunsystem nach Anspruch 8, wobei der erste Draht und zweite Draht lokal an einer oder mehreren Positionen entlang der Länge des elektrischen Drahts elektrisch miteinander verbunden sind.

10. Elektrisches Drahtzaunsystem nach Anspruch 9, wobei die lokale elektrische Verbindung zwischen dem ersten und zweiten Draht an dem Ende des elektrischen Drahts ausgeführt ist, gegenüber der Energieversorgungseinheit, und/oder an einer oder mehreren Zwischenstellen entlang der Länge des elektrischen Drahts.

11. Elektrisches Drahtzaunsystem nach Anspruch 8, 9 oder 10, wobei der zweite Draht für eine bessere elektrische Leitfähigkeit einen größeren Durchmesser hat als der erste Draht.

12. Elektrisches Drahtzaunsystem nach einem der vorhergehenden Ansprüche, wobei die Last, die erforderlich ist, um zu beginnen, die Verdrehungen abzuwickeln, zwischen 45 und 65% der Zugfestigkeit der Drahtstränge beträgt, vorzugsweise zwischen 50 und 65%, noch bevorzugter zwischen 55 und 60%.

13. Elektrisches Drahtzaunsystem nach einem der vorhergehenden Ansprüche, wobei die Stützstruktur eine permanente oder vorübergehende Struktur ist, die Pfosten oder andere Stützelemente umfasst, an denen ein oder mehrere elektrische Drähte in einer elektrisch isolierten Weise befestigt sind, und die Stützstruktur andere Zaunelemente umfassen kann.

14. Elektrisches Drahtzaunsystem nach dem vorhergehenden Anspruch, wobei die Stützstruktur aus Holz, Stahl, Kunststoff, Beton oder Kombinationen davon hergestellt sein kann.

15. Elektrisches Drahtzaunsystem nach einem der vorhergehenden Ansprüche, wobei die Drähte in zwei aufeinanderfolgenden verdrehten Abschnitten in abwechselnde Richtungen verdreht sind.

**Revendications**

1. Système de clôture à fil électrique comprenant au moins un fil électrique (10) fixé à une structure support (32) et une unité d'alimentation (34) pour alimenter le fil électrique (10), dans lequel ledit fil électrique (10) comprend des fils torsadés dans lequel :

   - un premier fil (12) est un fil d'acier non isolé ;
   - un deuxième fil (14) est un fil d'acier revêtu ayant une couleur d'amélioration de visibilité ;
   - les fils (12, 14) sont longitudinalement torsadés ensemble d'une manière alternée ;
   - au moins le premier fil (12) est connecté à l'unité d'alimentation (34) ;

   dans lequel le fil électrique (10) présente une alternance de sections torsadées (S1, S2) de fils (12, 14), dans des sens opposés, deux sections consécutives étant séparées par un point intermédiaire ou une section intermédiaire (S3) où les fils sont parallèles.

2. Système de clôture à fil électrique selon la revendication 1, dans lequel le fil électrique (10) est formé comme un fil à brins lisse, les fils (12, 14) étant préférablement en contact étroit l'un avec l'autre.

3. Système de clôture à fil électrique selon la revendication 1 ou 2, dans lequel le fil électrique (10) est un fil à deux brins consistant en les premier et deuxième fils.

4. Système de clôture à fil électrique selon la revendication 1, 2 ou 3, dans lequel les fils (12, 14) sont localement fermement unis au niveau des sections intermédiaires.

5. Système de clôture à fil électrique selon l'une quelconque des revendications précédentes, dans lequel une section torsadée comprend entre 3 et 15 spires complètes, préférablement entre 3 et 10.

6. Système de clôture à fil électrique selon l'une quelconque des revendications précédentes, dans lequel une spire a un pas d'entre 5 et 60 mm, préférablement entre 20 et 40 mm.

7. Système de clôture à fil électrique selon l'une quelconque des revendications précédentes, dans lequel le fil électrique a, dans les sections torsadées, un rapport pas sur diamètre d'entre 8 à 25, préférablement entre 12 à 18.

8. Système de clôture à fil électrique selon l'une quelconque des revendications précédentes, dans lequel le deuxième fil (14) est électriquement isolé, et le premier fil et le deuxième fil sont tous les deux électrifiés.

9. Système de clôture à fil électrique selon la revendication 8, dans lequel le premier fil et le deuxième fil sont localement électriquement interconnectés en une ou plusieurs position(s) sur la longueur du fil électrique.

10. Système de clôture à fil électrique selon la revendication 9, dans lequel l'interconnexion électrique locale entre les premier et deuxième fils est réalisée à l'extrémité du fil électrique, opposée à l'unité d'alimentation, et/ou en un ou plusieurs emplacement(s) intermédiaire(s) sur la longueur du fil électrique.

11. Système de clôture à fil électrique selon la revendication 8, 9 ou 10, dans lequel le deuxième fil a un diamètre plus grand que le premier fil pour une meilleure conductivité électrique.

12. Système de clôture à fil électrique selon l'une quelconque des revendications précédentes, dans lequel la charge requise pour commencer à dérouler les spires est entre 45 et 65 % de la résistance à la traction des brins de fils, préférablement entre 50 et 65 %, plus préférablement entre 55 et 60 %.

13. Système de clôture à fil électrique selon l'une quelconque des revendications précédentes, dans lequel la structure support est une structure permanente ou temporaire, comprenant des poteaux ou autres éléments support, sur laquelle un ou plusieurs fil(s) électrique(s) est/sont fixé(s) d'une manière électriquement isolée, et la structure support peut comprendre d'autres éléments de clôture.

14. Système de clôture à fil électrique selon la revendication précédente, dans lequel la structure support peut être constituée de bois, d'acier, de plastique, de béton, ou de combinaisons de ceux-ci.

**15.** Système de clôture à fil électrique selon l'une quelconque des revendications précédentes, dans lequel les fils sont, dans deux sections torsadées consécutives, torsadés dans des sens alternés.

Fig. 1

30

32

10

32

10

FiG.2

34

60

10

10

62 FiG.5

FIG. 4

FIG. 3

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1523883 A

- EP 1114582 A